# EUROPEAN PATENT SPECIFICATION

(11) **EP 0 449 670 B1**
(45) Date of publication and mention of the grant of the patent: **24.05.1995**
(21) Application number: 91302885.8
(22) Date of filing: 27.03.1991
(51) Int. Cl.: B60C 15/02

(54) **Tyre and rim**
Luftreifen und Felge
Pneumatique et jante

(30) Priority: 30.03.1990 JP 85221/90
(43) Date of publication of application: 02.10.1991
(73) Proprietor: SUMITOMO RUBBER INDUSTRIES LIMITED, Kobe-shi Hyogo-ken (JP)
(72) Inventor: Kimura, Katsuo, Toyota-shi, Aichi-ken (JP)
(74) Representative: Stewart, Charles Geoffrey

(56) References cited:
- EP-A- 0 131 117
- EP-A- 0 154 693
- EP-A- 0 163 625
- AU-B- 30 170
- DE-A- 1 505 867
- DE-A- 3 420 402
- DE-C- 190 039
- FR-A- 465 626
- FR-A- 633 178
- GB-A- 2 189 441
- US-A- 1 493 658

## Description

The present invention relates to a tyre and a rim.

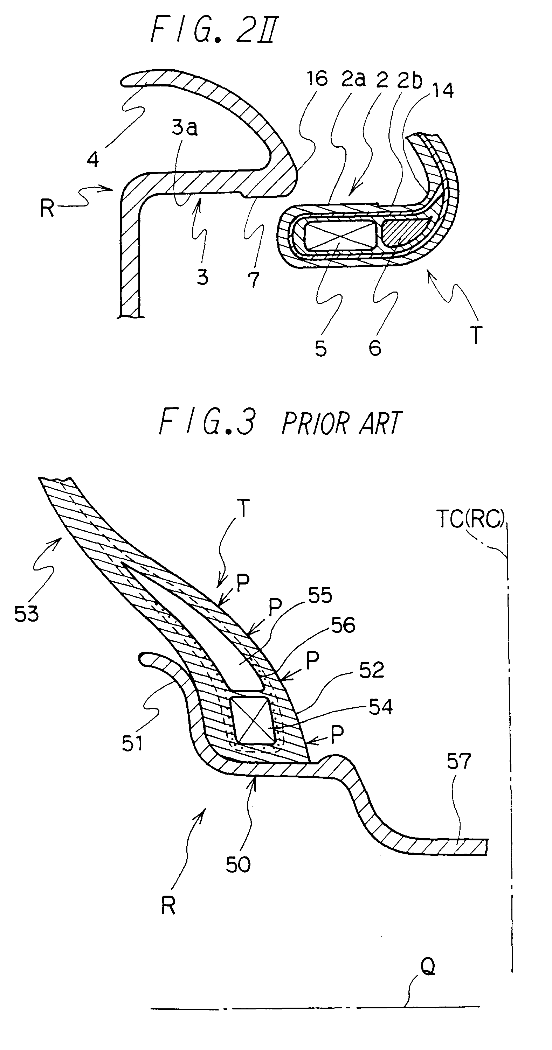

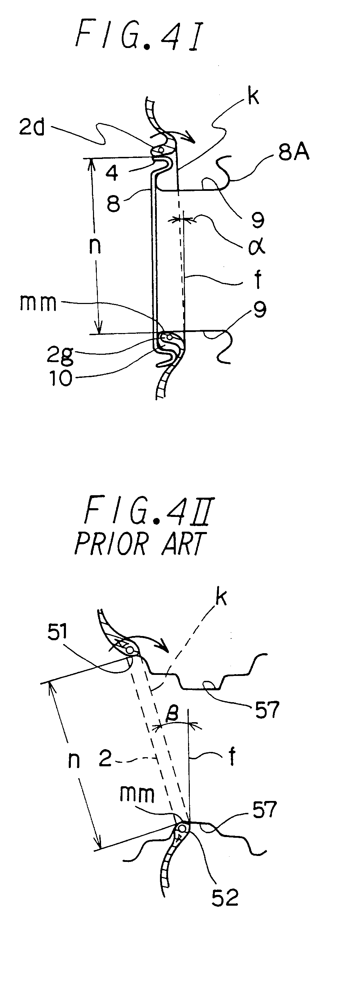

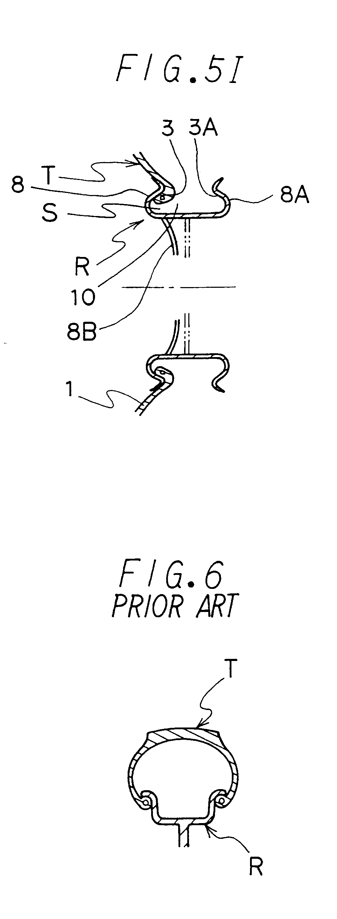

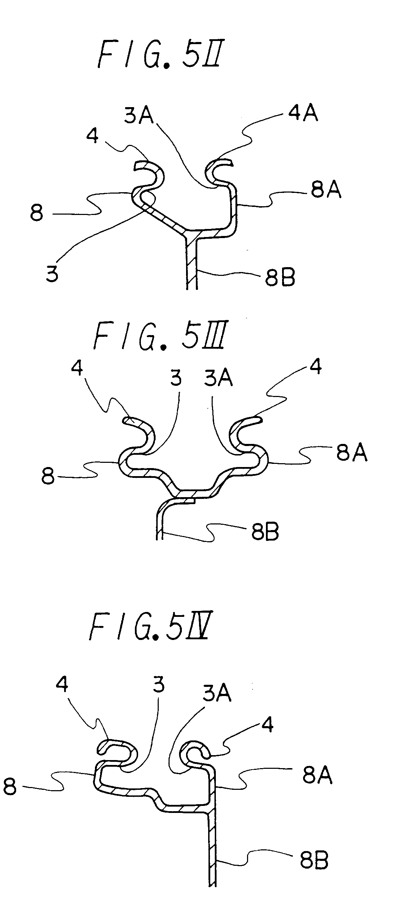

Fig 3 shows a conventional radial tyre in which a bead 52 of a tyre T is in engagement with a rim R. The rim R has a bead seat 50 extending in a direction going away from the rim across sectional centre plane RC, and a flange 51 standing at the distal part of the bead seat 50 and being curved outwardly. The tyre bead 52 is formed adjacent to and on a line extended from a sidewall portion 53. In Fig 3, numeral 54 shows bead wires, numeral 55 shows an apex of hard rubber or the like, and numeral 56 shows a bead filler which is a layer of reinforcing cords or the like.

In such a conventional tyre bead to rim structure, the bead 52 of the tyre T is engaged on the bead seat 50 of the rim R and supported in a sidewards direction by the flange 51. It is brought into close contact with the bead seat by internal air pressure P in the tyre T, and this provides the seat to maintain internal pressure P so that the required function of the tyre T can be successfully ex- ihibited. For this purpose, the tyre T has the apex 55 made of, for example, hard rubber and disposed usually at a location radially outside the bead wires 54 in order to maintain the tyre sectional shape to provide the lateral rigidity, and additionally, the tyre construction usually comprises the bead filler 56 enclosing the apex 55.

However, the above mentioned conventional construction has drawbacks. Firstly, the bead portion 52 needs to have a substantial volume to ensure lateral rigidity, and accordingly the components such as the apex 55, the bead filler 56 and the like need to be large. Secondly, the whole internal pressure p of the tyre T acts on by the bead wires 54 through the tyre casing, and accordingly the bead wires 54 needs to have high strength. These requirements require substantial tyre weight and a number of production steps, and leads to the problem of a uniform vulcanisation or cure of the tyre, becoming difficult to achieve.

A modified type of tyre-rim engagement has been proposed wherein the bead portions of the tyre in cross section additionally have a lateral- lyoutwardly-formed ridge made of solid hard rubber. The bead seat of the rim on this tyre has in cross section a distal part which defines a concave space to accommodate the ridge in such a manner that all the radially inward surface of the bead portion and the radially inward, the laterally outward, and radially outward surfaces of the ridge are brought into close contact with the bead seat of the rim. The bead seat may also have a rib at a laterally inner location to prevent the engaged bead of the tyre from moving laterally inwardly to become out of engagement with its seating.

However, this modified type of tyre-rim engagement has the following drawbacks. Firstly, the weight of the bead portion is increased because of the additional solid hard rubber ridge. Secondly, a tight dimensional tolerance of the bead portion is required because the bead portion is designed to be in contact with the bead seat in three directions, i.e. radially inwards, laterally outwards and radially outwards, and simultaneously with the rib on the bead seat, when the bead portion is brought into engagement with the rim. Thirdly, assembly of the tyre and the rim requires extra time and labour to engage the solid hard rubber ridge.

DE-A-190039 discloses a tubed tyre and wheelrim assembly in which the wheelrim has a pair of laterally inwardly projecting tyre engaging members and the tyre has beads each including a circumferentially extending bead core wherein the radially inner surface of the wheelrim projecting member contacts the radially outer surface of the tyre bead.

An object of the invention is to solve the problems mentioned above and to provide a tyre and a rim having a construction that is not only simple, but also small in volume and light in weight. Also, the number of bead wires is reduced, no additional degrees of tolerance are required, the assembly can maintain a safe running capability even in the air-loss condition, and the tyre is easy to assemble with the rim.

According to one aspect of the present invention a tyre comprises a lower sidewall and a bead including a circumferentially extending hoop or bead core and a bead apex, the bead having a wheel rim engaging bead base on the radially outer surface of the bead characterised by an annular recess formed laterally inwards of and adjacent to the bead base and an annular groove at the axially or laterally innermost edge of the bead defined by the bead and the lower sidewall such that when the tyre is fitted to a wheel rim having in the region contacted by the tyre a bead seat including an annular hump formed on the laterally inner edge of the bead seat and an annular ridge extending from the annular hump radially outwardly, the annular recess and the annular groove interlockingly mate with the annular hump and the annular ridge respectively to securely seat the tyre on the wheel rim.

In this specification the laterally outward direction means a direction going away from the sectional centre plane of a tyre or a rim, while the laterally inward direction means a direction opposite to the laterally outward direction.

Thus the bead has a wheel engaging bead base on a radially outer surface of the bead. This surface provides a bead base which may be tapered with an inclination of -5 to 20 degrees to the axial or lateral direction.

Another aspect of the invention provides a wheel rim comprising a disc for attachment to a vehicle hub or axle and a pair of laterally inwardly projecting tyre engaging members each having a bead seat on the radially inner surface thereof, characterised by a bead retaining hump located laterally inwards of and adjacent to the bead seat. Rim bead seats are thus may be provided on a radially inner surface of the tyre engaging members and these seats may be tapered at between -5 and 20 degrees to the axial or lateral direction.

A third aspect of the invention provides a tyre and wheel rim assembly comprising the above tyre and wheel.

In the assembly the annular groove having a hooked sectional shape defined by the bead portion and the sidewall lower portion of the tyre are brought into contact with the bead seat and optionally a flange of the rim. Thus the bead portion is pressed from the radially outside so that the bead portion is retained by the configurational engagement weith the bead set. The bead seat supporting similar may be a disc or a disc with a well provided at the periphery of the disc, or any combination thereof.

Embodiments of the invention will now be described by way of example only, in conjunction with the attached drawings included:-
Fig 1 is a sectional view of a tyre and rim of the present invention;
Fig 21 is an enlarged sectional view showing a part of the embodiment of Fig 1;
Fig 211 is an exploded sectional view showing part of the embodiment of Fig 1 for explanatory purposes;
Fig 3 is a sectional view showing a part prior part bead and bead seat;
Fig 41 is a view of an assembly of the tyre and the rim of the present invention;
Fig 411 is a view of an assembly of prior art tyre and a prior art rim;
Figs 51 to 51V are sectional views of rim embodiments; and
Fig 6 is a sectional view showing a further prior art structure known as the Continental Tyre System or CTS.

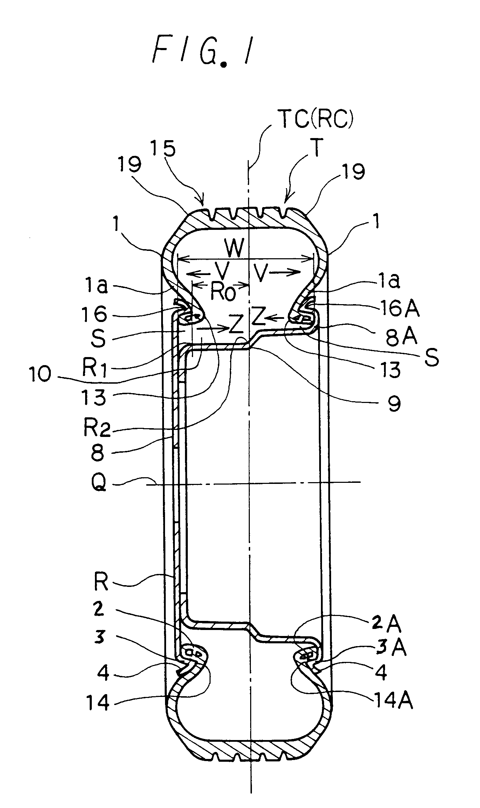

In Figs 1 & 21 a rim R is formed by two metal discs 8 & 8A which provide bead seats 3 and 3A, flanges 4 and 4A and a well 9. At the outer peripheries of the discs 8, 8A, there are provided annular ridges 16 projecting laterally inwardly in the direction Z.

Figs 21 and 211 show a tyre bead 2 and the rim R for one side of the embodiment of Fig I. The other bead 2 and bead seat at the other side are of course the same. There is a tyre fitting well between the two sides.

The tyre T comprises sidewalls 1, beads 2 and intermediate regions 13 between a lower portion la of the sidewalls 1 and the bead portions 2. The sidewall 1 is inclined in a direction approaching the tyre sectional centre plane TC and the sidewall 1 changes its direction laterally outwardly at the intermediate region 13 so that the bead 2 projects in a direction V away from the tyre sectional centre plane or tyre equator, i.e in a laterally outward direction. The bead 2 and the lower portion 1 a of the sidewall 1 extend in different directions crossing each other, and form an annular groove 14 opening towards the laterally outward direction, i.e. the direction V. The bead 2 comprises circumferentially extending bead wire reinforcements 5, having a relatively flat cross sectional configuration and a rubber apex 6 having a relatively small size. Further, it can be seen that the bead centre line BC has a nearly parallel relationship with the tyre lateral datum line PO, which is parallel to the axis of the tyre.

The rim has its ridges 16 shaped to provide a bead seat 3a, having a nearly cylindrical shape extending in the laterally inward direction Z from the radially outer periphery of the disc 8 and a flange 4 having a radially outwardly curved shape which continuously extends from the laterally inward end of the bead seat 3 for supporting at least a part of the outer surface of the sidewall lower portion 1 a of the tyre. The annular ridge 16 functions as a tyre engaging member.

Alternatively, in another embodiment the rim R has a bead seat 3 but does not have a flange 4. In such an arrangement the tyre is required to have a reinforced structure in which an increased endurance is given to the intermediate region 13 between the sidewall lower portion 1 a and the bead portion 2.

Thus, in both embodiments the annular ridge 16 provides a bead seat 3a extruding inwardly of the disc 8a. Also, at the inward edge of the bead seat 3a, the rim R may have an annular hump 7, which projects slightly in the radially inwards, for which the tyre T has a corresponding annular recess 2b retreating radially inwardly as shown in Fig 111. This annular recess 2b which has a small depth in the radially inward direction is formed laterally inwardly and adjacent to the bead base 2a of the tyre. when the tyre T is brought into engagement with the rim R, the hump portion 7 of the rim R engages the recess 2b of the tyre T when the annular inside surface 3a of the bead 3 of the rim R contacts the bead base 2a of the tyre bead 2 of the tyre T.

Alternatively, in another embodiment the bead seat 3 does not have a hump portion 7 and the tyre bead 2 does not have a recess 2b.

In a prior art rim shown in Fig 3, the engagement of the tyre T with the rim R is achieved by seating the bead 52 of the tyre T on a bead seat 50 of the rim R and by supporting the bead 52 in the laterally outward direction by means of a flange 51. In contrast, the tyre T and the rim R of the present invention employs a structure clearly shown in Fig 1, Fig 21 and Fig 211 in which at the outer peripheries of the discs 8, 8a there are provided annular ridges 16, projecting in the laterally inward direction, i.e. the direction Z engaging with the bead portions Z of the tyre T so that the bead 2, 2A and the lower portion 1aA of the sidewall 1 form an annular groove 14, 14A opening in the laterally outward direction, i.e. the direction V. By virtue of this arrangement, the bead base 2a of the annular groove 14 of the tyre T is engaged with the annular inside surface 3a of the bead seat 3 on the annular ridge 16 shaped to accept the bead portion, and the sidewall lower portion 1 a is supported by the flange 4, so that the bead 2 of the tyre T is held from above on the bead seat 3 of the rim R. The bead portion 2 and the bead seat 3a are kept in tight contact with each other by the internal pressure of the tyre T when the tyre is inflated. Thus the annular inside surface 3a of the bead seat 3 of the rim R supports in the radially inward direction the bead base 2a of the bead portion 2 of the tyre and this provides a seal.

In Figs 1 & 21 reference S shows a gap or space between the rim well and the bead 2 on its bead seat and reference y shows the gap or space between the discs 8, 8A and the bead on its seat. These spaces assist the operation of assembling and disassembling the tyre and wheel.

The height 'a' of the flange 4 is preferably five times as large as the thickness 'b' of the bead portion, i.e. a 5b. If the flange height 'a' is selected outside this range, it becomes difficult to assemble the tyre with the rim.

In Fig 21, the lateral datum line X representing the bead seat diameter is perpendicular to the radial datum line Y corresponding to the plane of the disc. Passing through the intersecting point O of these two datum lines, a straight line P is shown which is the annular inside surface 3a of the bead seat 3. In order to exhibit more effectively the advantage of the present invention, the angle defined by the datum line X and the line P preferably satisfies the relationship: -5 degrees < angle XOP < 20 degrees. The angle XOP corresponds to the angle of inclination of a conventional bead seat. If the angle XOP < -5 degrees, it becomes too difficult for the bead portion 2 to reach the bead seat 3 after crossing the hump portion 7. On the other hand, of the angle XOP > 20 degrees, the tyre rim engagement becomes insufficient and the seal becomes inadequate. Therefore, it is desirable to set the angle XOP in accordance with the aforementioned relationship.

With respect to the shape of the disc 8, as far as the disc 8 satisfies the minimum requirements for the space S in the well 10 which is required for the assembly of the tyre, there can be employed any shape, thus for example, the disc type illustrated by the solid lines in Fig 21 and by the solid lines in Fig 1, a rim type illustrated by broken lines in Fig 21 or an integral type illustrated in Fig 51 as the alternatives in Figs 511 to 51V can be used. In Figs 51 to 51V note that the disc 8 may have on a radially inner plate member 8B. The space S is required to be provided on at least one of the right and left sides under the beads 2.

The wigth Rₒ of the well 10 is defined as the distance between the points R₁ and R₂ in Fig 1, where the point R₁ is the intersection point of the vertical line drawn from the laterally inside edge of the annular ridge 16 or the rim and the deepest region of the well 10, while the point R₂ is the opposite end of the deepest region to the point R.

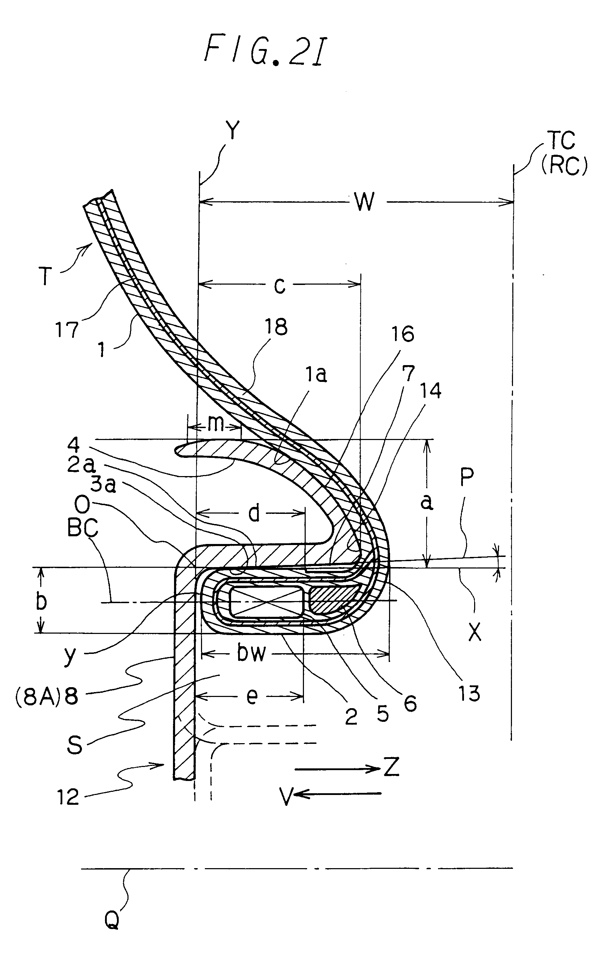

In Fig 2, reference 'c' represents the lateral distance from the datum line Y which is the inside surface of the disc 8 to a point where the bead seat turns to connect to the flange which is the nearest point to the rim centre plane RC. Reference 'd' represents the lateral distance from the datum line Y to the laterally outside edge of the hump portion 7, and reference 'e' represents the datum line Y to the part of the bead wires 5 nearest to the centre plane TC. The width of the hump portion 7 is preferably determined in accordance with the formula: 0.6 ^{<-_} d/c 0.7. The location of the bead wire 5 is preferably designed in accordance with the formula: d > e, because such a design allows the bead base 2a of the tyre having the bead wires 5 to be set at the annular inside surface 3a of the bead seat 3 being located on the laterally outside of the hump portion 7 of the rim R, and consequently ensures enough engagement to prevent undesired dislodgement of the tyre T and the rim R.

The hump portion 7 preferably has a radial height of 1.0 mm to 1.5 mm. Such a height is effective in preventing the bead portion 2 from undesirably moving.

The rim width W is preferably selected in accordance with the formula: (1/15)W < c < (1/15)W. Such a rim width W ensures reliable engagement and easy assembly of the tyre and the rim. If the annular ridge width 'c' is smaller than (1/15)W, tyre-rim separation becomes likely to occur. On the contrary, if the width 'c' is too large relative to the rim width W, it becomes difficult to assemble the tyre to the rim. Where the tyre is to be used as a safety tyre, the tyre is just designed with a small rim width W and consequently the maximum bead seat width 'c' equal or near to (1/5)W is to be selected.

The bead radial thickness 'b' is preferably- as small as possible in order to make the present invention yield the maximum advantage. Therefore, it is preferable to make the bead wire coil 5 a thin and elongated shape in cross section, as showing in Fig 21 by employing a strand/turn structure (for example 8 x 4, 8 x 3, 6 x 3 or the like). This increases the mutually pressing or contact area between the bead base 2a and the annular inside surface 3a of the bead seat 3. The bead wire core 5 having an elongated shape and being positioned side by side ensure increased reliability of the engagement of the beads 2 with the bead seats.

Further, the internal pressure of the tyre in the casing can be borne by the bead seat 3, 3a, as well as by the bead wire core 5, and therefore the number of wires in the bead wire core 5 can be reduced.

Since the bead volume is small in this manner, a uniformly thin thickness can be employed for the structure from the bead to the tyre buttress 19 (refer to Fig 1), in which a casing ply 17, a sidewall 1 with a uniform thickness and an inner liner 18 form a structure exitending approximatly from a region where the bead portion 2 crosses the lateral datum line X to the upper portion of the sidewall 1. Thus, by minimising the thickness of the sidewall 1 and having a uniform thickness, the tyre is light in weight and this allows more uniform vulcanisation.

Compared to a conventional tyre the components of the bad portion are reduced in number and therefore the structure of the bead portion is simplified. In accordance with the present invention, the minimum components required for a sufficient strength in the bead portion are: the bead wire core 5 to bear the tyre internal pressure and to hold the casing line at the sidewall lower portion; the rubber layer 6 adjacent to the bead wires 5; and single or plural casing plies. The rubber filler 6 is required to fill the space between the bed wires and the casing ply, and therefore the rubber filler 6 does not necessarily have rigidity.

If the present invention is intended to be applied to a safety tyre capable of running to a certain degree in the event of air loss occurred during running, the rim width W should be as small as possible. Then when deflated the flange 4 has between it and the road, the tread 15 and the folded sidewally. In addition, taking the running in the air loss condition into consideration, the flange 4 is designed to have a part (the part 'm' in Fig 21) which is nearly parallel to the lateral datum line X. In the embodiment of Fig 21, the part 'm' is formed with a circular arc shape and the centre of the circular arc is located on the radial datum line Y which is also the datum line for the rim width. The radius of the circular arc is preferably larger than the annular ridge width 'c' for a better deflated running performance. Alternatively, the part 'm' may be formed with a straight shape.

The present invention can be applied to any vehicle tyre, for example, a passenger car tyre, a light truck tyre, a truck or bus tyre, an industrial tyre, an aircraft tyre or the like. Particularly in the case that the present invention is applied as a radial safety tyre for passenger cars, the wheel according to the present invention is advantageous compared with the so-called Continental Tyre System illustrated in Fig 6, because the wheel according to the present invention provides'easy and reliable tyre-rim assembly, sufficient protection for the sidewall 1, and improved simple and easy assembly or disassembly of the bead seat 3 with the disc 8.

The embodiment of Fig 1 employs in combination the disc 8 of a flat plate shape on the outside and the cylinder 9 of a deep drawn bowl shape on the inside. Therefore, when the tyre T is assembled with the rim R, the assembly work is easily carried out at the periphery of the disc. In addition, the well 10 can be made shallow.

With regard to this, Fig 41 and Fig 411 give schematic views respectively showing the assembly of the wheel according to the present invention and of a prior art wheel.

In Fig 41 there is shown an angle defined by a line 'f' parallel with the rim sectional centre line an a laterally inward contour 'k' of the bead heel where one part of the bead is located at a point 'mm' where what bead to bead distance is a minimum when the opposite part of the bead passes over the opposite rim flange. Similarly in Fig 411 there is shown an angle defined in the same manner by a line 'f' parallel to the rim sectional centre line and a laterally inward contour 'k' of the bead heel when one part of the bead is located at a point 'mm' in the well making' the bead to bead distance shortest when the opposite bead portion passes over the opposite rim flange.

The angle a at the time of tyre-rim assembly in accordance with the present invention is near to 0 degree which is small compared with the angle at the time of tyre-rim assembly in the prior art wheel. The reference 'n' is a length required for the bead portion to pass over the rim flange, for example, in Fig 41, a length between the lower end 2g and the upper end 2d of the bead portion when the lower end 2g falls into the well 10 and the upper end 2d pass over the rim flange 4.

Assuming the length 'n' is identical in both Fig 41 and Fig 411, the diameter of the bead portion capable of passing over the rim flange 4 or 51 and providing successful engagement can be made larger in the arrangement of the present invention (the difference is n x (cos a - cos (3) and larger diameter facilitates tyre and rim assembly.

Or in other words, in case of a rim of the present invention and a prior art rim both having the same flange diameter, the required inside diameter of the annular bead portion to pass over the rim flange of the present invention is smaller (the difference is the flange diameter x ((1/cos (3-(1/cos a)) and accordingly the present invention facilitates the tyre-rim assembly work.

While in the arrangement according to the present invention shown in Fig 41 the bead portion can go over the opposite flange 4 n a plane almost close to the disc 8 (at small inclination), in the prior art arrangement shown in Fig 411 the bead portion 52 must be fallen into the well portion 57. Thus, it can be understood that the prior art arrangement needs a comparatively large angle and as a result makes tyre-rim assembly difficult.

Additionally, the arrangement shown in Fig 1 has another advantage in that freedom in the structural design or the ornamental design is broadened.

It should be noted that the present invention is not limited to the described embodiments and various modifications can be made for example the centre wheel shape as far as the modification does not deviate from the gist of the present invention as defined in the appended claims

Because of the construction described herein before, the present invention provides the following advantages.
1) According to the present invention, the bead portion of the tyre is held down from above only by the bead seat of the rim to give a tight seal and thus force caused by the inner pressure is supported at the bead seat by the bead wires, which leads to a reduced and smaller number of bead wires. The tyre weight can be made light because the structure of the bead portion 2 is simple, the bead volume is small and the sidewall thus can be made thin. The bead can be made flat and small and therefore, the volume of the bead portion can be reduced considerably. The rising portion'from the bead portion to the sidewall can also be thin because this rising portion thickness can consist only of the casing thickness and the side rubber thickness, the lateral rigidity being provided by the flange 4 rising from the bead seat.
2) The tyre-rim assembly work is made easy. The laterally outside edge of the bead is not in contact with the laterally inner surface of the rim disc providing a gap 'y' and a space 's' is left between the bead portion and the rim wall in the assembled condition as shown in Fig 21. The space helps to make the tyre-rim assembly. Further, a shallow well can be employed. Therefore the rim can be made light weight and the freedom for rim design is expanded. Namely the tolerance of the configurational accuracy is liberalised, because the engagement is provided only between the bead seat and the bead portion, and a space is kept on the laterally outside and the radially inside of the bead portion.
3) Undesired separation or dislodgement of the bead portion from the rim is effectively prevented particularly if the hump portion is provided n the bead seat.
4) The runflat capability is improved, because the sidewall lower portion is protected and reinforced by the flange. The assembly can continue running to a certain degree even in an air loss condition.
5) There is no need for a high turn up construction in which the turned up edges of the carcass ply is located at a higher position, because the bead seat with the flange and the bead wire press each other. This helps a weight reduction.
6) The number of components in the tyre can be reduced because the bead structure is simple.
7) The wheel is widely applicable for example to a low internal pressure wheel as well as to a high internal pressure wheel such as a wheel for aircraft use by changing the rim strength design as required.

## Claims

1. A tyre having a pair of sidewalls (1) each comprising a lower sidewall (1a) and a bead (2) including a circumferentially extending hoop or bead core (5) and a bead apex (6), the bead (2) having a wheel rim engaging bead base (2a) on the radially outer surface of the bead (2) characterised by an annular recess (2b) formed laterally inwards of and adjacent to the bead base (2a) and an annular groove (14) at the axially or laterally innermost edge of the bead (2) defined by the bead (2) and the lower sidewall (1 a) such that when the tyre is fitted to a wheel rim having in the region contacted by the tyre a bead seat (3) including an annular hump (7) formed on the laterally inner edge of the bead seat (3) and an annular ridge (16) extending from the annular hump (7) radially outwardly, the annular recess (2b) and the annular groove (14) interlockingly mate with the annular hump (7) and the annular ridge (16) respectively to securely seat the tyre on the wheel rim.

2. A tyre according to claim 1 characterised in that the bead base (2) has an inclination or taper in the range of -5 to 20 degrees to the lateral direction.

3. A tyre according to claim 1 or 2 characterised in that the bead core (5) is elongated in the lateral direction, being laterally wider than its radial thickness.

4. A tyre according to claim 1, 2 or 3 characterised in that the sidewall thickness radially outside the bead core (5) is substantially constant and no bead apex extends radially outside the bead core (5).

5. A wheel rim comprising a disc for attachment to a vehicle hub or axle and a pair of laterally inwardly projecting tyre engaging members (16) each having a bead seat (3,3a) on the radially inner surface thereof, characterised by a bead retaining hump (7) located laterally inwards of and adjacent to the bead seat (3,3a).

6. A wheel rim according to claim 5 characterised by a radially outwardly curved flange (4) extending from a laterally inward edge of the engaging member (16), the flange being shaped to contact part of an outer surface of a tyre sidewall.

7. A wheel rim according to claim 5 or 6, characterised by the bead seat (3,3a) having a taper or inclination in the range of -5 to 20 degrees to the axial or lateral direction.

8. A tyre and wheel rim assembly wherein the wheel rim comprises a pair of spaced apart radially inwardly facing bead seats (3,3a) and the tyre comprises a pair of sidewalls (1) each comprising a lower sidewall (1a) and a bead (2) including an annular hoop or bead core (5) and in each bead a bead base (2a) on the radially outer surface of the bead (2) for seating on the wheel rim bead seats (3,3a) characterised in that the wheel rim comprises an annular hump (7) formed in the laterally inner edge of the bead seat (3), an annular ridge (16) extending from the annular hump (7) radially outwardly and the tyre comprises an annular recess (2b) formed in the tyre bead (2) laterally inwards of and adjacent to the bead base (2a) and an annular groove (14) defined between the bead (2) and the lower sidewall (1a) formed at the laterally innermost edge of the bead (2) with respect to the tyre sectional centre plane (TC) wherein the rim annular hump (7) and annular ridge (16) interlockingly mate respectively with the bead annular recess (2b) and annular groove (14) to securely seat the bead on the rim.

9. A tyre and wheel assembly according to claim 8 characterised in that the rim (R) further comprises a radially outwardly curved flange (4) extending from the laterally inward edge portion of the engaging member (16), the flange (4) having a shape to contact part of an outer surface of the tyre sidewall.

10. A tyre and wheel rim assembly according to either of claims 8 or 9 characterised in that the wheel rim includes a first flat disc (8) parallel to the tyre sectional centre plane (TC) and a second cylinder-shaped disc (8a) fitted within the inner peripheral surface and spaced apart from the tyre bead (2), the second cylinder-shaped disc (8a) including an outer peripheral wall portion substantially parallel to the rim bead seat (3).

## Patentansprüche

1. Ein Reifen mit einem Paar von Seitenwänden (1), die jeweils eine untere Seitenwand (1 a) aufweisen, und einem Wulst (2), der einen sich in Umfangsrichtung erstreckenden Kragen oder Wulstkern (5) und einen Wulstkernreiter (6) aufweist, wobei der Wulst (2) eine mit einer Radfelge in Eingriff stehende Wulstbasis (2) an der radialen Außenfläche des Wulstes (2) besitzt, gekennzeichnet durch eine ringförmige Ausnehmung (2b), die seitlich innerhalb von und neben der Wulstbasis (2a) ausgebildet ist, und eine ringförmige Rille (14) an der axial oder seitlich innersten Kante des Wulstes (2), die durch den Wulst (2) und die untere Seitenwand (1 a) definiert ist, so daß wenn der Reifen auf eine Radfelge aufgesetzt ist, die in dem durch den Reifen berührten Bereich einen Wulstsitz (3) mit einem ringförmigen Hump (7), welcher an der seitlich inneren Kante des Wulstsitzes (3) ausgebildet ist, und einen ringförmigen Grat (16), der sich von dem ringförmigen Hump (7) radial nach außen erstreckt, aufweist, die ringförmige Ausnehmung (2b) und die ringförmige Rille (14) in verriegelnder Weise mit dem ringförmigen Hump (7) und dem ringförmigen Grat (16) jeweils zusammenpassen, um den Reifen sicher auf der Radfelge zu plazieren.

2. Ein Reifen nach Anspruch 1, dadurch gekennzeichnet, daß die Wulstbasis (2) eine Neigung oder Schräge in dem Bereich von -5 bis 20 Grad zu der seitlichen Richtung hat.

3. Ein Reifen nach Anspruch 1 oder 2, dadurch gekennzeichnet, daß der Wulstkern (5) in der Seitenrichtung länglich ist, wobei er in seitlicher Richtung breiter als ihre radiale Dicke ist.

4. Ein Reifen nach Anspruch 1, 2 oder 3, dadurch gekennzeichnet, daß die Seitenwanddicke radial außerhalb des Wulstkerns (5) im wesentlichen konstant ist und sich kein Wulstkernreiter radial außerhalb des Wulstkerns (5) erstreckt.

5. Eine Radfelge mit einer Scheibe zur Befestigung an einer Fahrzeugnabe oder -achse und einem Paar von seitlich nach innen vorstehenden Reifeneingriffselementen (16), die jeweils einen Wulstsitz (3, 3a) an ihrer radialen Innenfläche aufweisen, gekennzeichnet durch einen Wulsthaltehump (7), der seitlich innerhalb von und neben dem Wulstsitz (3, 3a) angeordnet ist.

6. Eine Radfelge nach Anspruch 5, gekennzeichnet durch einen radial nach außen gekrümmten Flansch (4), der sich von der seitlich inneren Kante des Eingriffselements (16) erstreckt, wobei der Flansch geformt ist, um einen Teil der Außenfläche einer Reifenseitenwand zu berühren.

7. Eine Radfelge nach Anspruch 5 oder 6, dadurch gekennzeichnet, daß der Wulstsitz (3, 3a) eine Schräge oder Neigung in dem Bereich von -5 bis 20 Grad zu der Axial- oder Seitenrichtung hat.

8. Eine Reifen- und Radfelgenanordnung, worin die Radfelge ein Paar von beabstandeten radial nach innen weisenden Wulstkernen (3, 3a) aufweist und der Reifen ein Paar von Seitenwänden (1), welche jeweils eine untere Seitenwand (1 a) aufweisen, und einen Wulst (2), welcher einen ringförmigen Teil oder Wulstkern (5) und in jedem Wulst eine Wulstbasis (2a) an der radialen Außenfläche des Wulstes (2) zum Plazieren auf den Radfelgenwulstsitzen (3, 3a) besitzt, aufweist, dadurch gekennzeichnet, daß die Radfelge einen ringförmigen Hump (7), der in der seitlich inneren Kante des Wulstsitzes (3) gebildet ist, und einen ringförmigen Grat (16), der sich von dem ringförmigen Hump (7) radial nach außen erstreckt, aufweist, und daß der Reifen eine ringförmige Ausnehmung (2b), welche in dem Reifenwulst (2) seitlich innerhalb von und neben der Wulstbasis (2a) gebildet ist, und eine ringförmige Rille (14), die zwischen dem Wulst (2) und der unteren Seitenwand (1 a), welche an der seitlich innersten Kante des Wulstes (2) hinsichtlich der Reifenmittelschnittebene (TC) gebildet ist, definiert ist, aufweist, wobei der ringförmige Felgenhump (7) und der ringförmige Grat (16) jeweils verriegelnd zu der ringförmigen Wulstausnehmung (2b) und der ringförmigen Rille (14) passen, um den Wulst an der Felge sicher zu plazieren.

9. Eine Reifen- und Radfelgenanordnung nach Anspruch 8, dadurch gekennzeichnet, daß die Felge (R) weiterhin einen radial nach außen gekrümmten Flansch (4) aufweist, der sich von dem seitlich inneren Kantenbereich des Eingriffselements (16) erstreckt, wobei der Flansch (4) eine Form hat, um einen Teil der Außenfläche der Reifenseitenwand zu berühren.

10. Eine Reifen- und Radfelgenanordnung nach Anspruch 8 oder 9, dadurch gekennzeichnet, daß die Radfelge eine erste flache Scheibe (8) parallel zu der Reifenmittelschnittebene (TC) und eine zweite zylinderförmige Scheibe (8a), die in die innere Umfangsfläche und beabstandet von dem Reifenwulst (2) eingesetzt ist, aufweist, wobei die zweite zylinderförmige Scheibe (8a) einen äußeren Umfangswandungsbereich besitzt, der im wesentlichen parallel zu dem Felgenwulstsitz (3) verläuft.

## Revendications

1. Pneumatique ayant une paire de flancs (1) comprenant chacun une partie inférieure de flanc (1 a) et un talon (2) ayant un cercle circonférentiel ou une tringle circonférentielle (5) et une pointe (6) de bourrage de talon, le talon (2) ayant une jante de roue au contact d'une base de talon (2a) à la surface radialement externe du talon (2), caractérisé par une cavité annulaire (2b) formée latéralement à l'intérieur de la base de talon (2a) et près de cette base, et une gorge annulaire (14) placée au bord axialement ou latéralement le plus interne du talon (2), délimitée par le talon (2) et la partie inférieure du flanc (1 a) afin que, lorsque le pneumatique est monté sur une jante de roue ayant, dans la région qui est au contact du pneumatique, un siège (3) de talon possédant une saillie annulaire (7) formée sur le bord latéralement interne du siège du talon (3) et une nervure annulaire (16) partant de la saillie annulaire (7) radialement vers l'extérieur, la cavité annulaire (2b) et la gorge annulaire (14) coopèrent sous forme emboîtée avec la saillie annulaire (7) et la nervure annulaire (16) respectivement pour assurer un logement ferme du pneumatique sur la jante.

2. Pneumatique selon la revendication 1, caractérisé en ce que la base (2) de talon a une inclinaison ou orientation faisant un angle de -5 à à 20 avec la direction latérale.

3. Pneumatique selon la revendication 1 ou 2, caractérisé en ce que la tringle (5) est allongée en direction latérale, et a une largeur latérale supérieure à son épaisseur radiale.

4. Pneumatique selon la revendication 1, 2 ou 3, caractérisé en ce que l'épaisseur du flanc radialement externe de la tringle (5) est pratiquement constante et aucune pointe de bourrage de talon n'est disposée radialement à l'extérieur de la tringle (5).

5. Jante de roue comprenant un disque destiné à être fixé à un essieu ou moyeu de véhicule, et une paire d'organes (16) de coopération avec un pneumatique, dépassant latéralement vers l'intérieur et ayant chacun un siège (3, 3a) de talon à sa surface radialement interne, caractérisée par une saillie (7) de retenue de talon placée latéralement vers l'intérieur du siège (3, 3a) de talon et adjacente à ce siège.

6. Jante de roue selon la revendication 5, caractérisée par un flasque (4) à courbure radiale vers l'extérieur partant du bord latéralement interne de l'organe de coopération (16), le flasque ayant une configuration telle qu'il est au contact d'une partie d'une surface externe d'un flanc du pneumatique.

7. Jante de roue selon la revendication 5 ou 6, caractérisée en ce que le siège (3, 3a) a une inclinaison ou orientation faisant un angle de -5 à +20° par rapport à la direction axiale ou latérale.

8. Ensemble à pneumatique et jante de roue dans lequel la jante de roue comporte deux sièges (3, 3a) de talon tournés radialemement vers l'intérieur et espacés, et le pneumatique comprend deux flancs (1) comportant chacun une partie inférieure de flanc (1 a) et un talon (2) qui contient un cercle annulaire ou une tringle annulaire (5) et, dans chaque talon, une base (2a) de talon placée à la surface radialement externe du talon (2) afin qu'elle se loge sur les sièges de talon (3, 3a) de la jante de roue, caractérisé en ce que la jante de roue comporte une saillie annulaire (7) formée au bord latéralement interne du siège (3) de talon, une nervure annulaire (16) dépassant de la saillie annulaire (7) radialement vers l'extérieur, et le pneumatique comporte une cavité annulaire (2b) formée dans le talon (2) latéralement vers l'intérieur de la base (2a) de talon et adjacente à cette base, et une gorge annulaire (14) délimitée entre le talon (2) et la partie inférieure du flanc (1 a) formée au bord latéralement le plus interne du talon (2) par rapport au plan central de coupe (TC) du pneumatique, la saillie annulaire (7) de la jante et la nervure annulaire (16) coopérant par emboîtement respectivement avec la cavité annulaire (2b) de talon et la gorge annulaire (14) afin que le talon de la jante soit fermement logé.

9. Ensemble à pneumatique et roue selon la revendication 8, caractérisé en ce que la jante (R) comporte en outre un flasque (4) courbé radialement vers l'extérieur, partant de la partie de bord latéralement interne de l'organe de coopération (16), le flasque (4) ayant une configuration telle qu'il reste au contact d'une partie d'une surface externe du flanc du pneumatique.

10. Ensemble à pneumatique et jante de roue selon l'une des revendications 8 et 9, caractérisé en ce que la jante de roue comporte un premier disque plat (8) parallèle au plan central (TC) de coupe du pneumatique et un second disque (8a) en forme de cylindre disposé à l'intérieur de la surface périphérique interne et placé à distance du talon (2) du pneumatique, le second disque en forme de cylindre (8a) ayant une partie de paroi périphérique externe qui est sensiblement parallèle au siège (3) de talon de la jante.
